# EUROPEAN PATENT APPLICATION

(11) **EP 4 763 014 A1**
(43) Date of publication of application: **24.06.2026**
(21) Application number: 24874783.4
(22) Date of filing: 04.10.2024
(51) Int. Cl.: A47J 41/02, A61J 1/14, A61J 3/00, B65D 81/38

(54) **CONTAINER AND METHOD**

(30) Priority: 04.10.2023 JP 2023173153
(71) Applicant: Twincapsula Inc., Tsukuba-shi, Ibaraki 305-0047 (JP)
(72) Inventor: MIYAZAKI, Kazuhiro, Tsukuba-shi, Ibaraki 305-0047 (JP); HATAKENAKA, Ryuta, Tsukuba-shi, Ibaraki 305-0047 (JP)
(74) Representative: Müller-Boré & Partner Patentanwälte PartG mbB
(86) International application number: PCT/JP2024/035708
(87) International publication number: WO 2025/075184

(57) **Abstract**

An object of the present invention is to provide a container having an excellent heat retention effect.

This application relates to a container comprising: a bottom wall; and a side wall, wherein the bottom wall and the side wall have a heat insulating property, a ratio of a length from the bottom wall to an opening formed by the side wall to a square root of an area of the opening ((length from bottom wall to opening (mm))/(square root of area of opening (mm))) is 3.75 or more, and an accommodating portion formed by the bottom wall and the side wall is formed perpendicular to the bottom wall so as to extend linearly from the bottom wall to an opening end, or the accommodating portion formed by the bottom wall and the side wall is formed so as not to cause a plane parallel to the opening of a space by the accommodating portion to narrow from a bottom surface to the opening end.

## Description

### Technical Field

The present invention relates to a container and a method.

### Background Art

In recent years, specimens collected from a human body such as blood or urine, processed cells obtained by processing human or animal cells, pharmaceutical products, or the like have been transported while being kept cold. In a case where these specimens, processed cells, pharmaceutical products, or the like are individually transported in a small amount, a heat insulating container having a sufficient size can provide a sufficient heat retention effect, but a heat insulating container whose volume is too large with respect to the volume of an object to be insulated is not preferable due to a transportation cost.

### Summary of Invention

### Technical Problem

An object of the present invention is to provide a container having an excellent heat retention effect. Another object of the present invention is to provide a method having an excellent heat retention effect.

### Solution to Problem

The present invention solves the above problem by any of the following:
[1] A container comprising: a bottom wall; and a side wall, wherein the bottom wall and the side wall have a heat insulating property, a ratio of a length from the bottom wall to an opening formed by the side wall to a square root of an area of the opening ((length from bottom wall to opening (mm))/(square root of area of opening (mm))) is 3.75 or more, and an accommodating portion formed by the bottom wall and the side wall is formed perpendicular to the bottom wall so as to extend linearly from the bottom wall to an opening end, or the accommodating portion formed by the bottom wall and the side wall is formed so as not to cause a plane parallel to the opening of a space by the accommodating portion to narrow from a bottom surface to the opening end;
[2] The container according to [1], wherein the bottom wall and/or the side wall includes a vacuum space;
[3] The container according to [2], wherein an inner wall forming the vacuum space has a thickness of 0.25 mm or less;
[4] The container according to [2] or [3], wherein a surface of the inner wall and/or an outer wall forming the vacuum space is provided with a function of enhancing radiative insulation of the vacuum space;
[5] The container according to any one of [1] to [4], wherein the opening has an area of 5,000 mm² or less;
[6] The container according to any one of [1] to [5], wherein the length from the bottom wall to the opening is 150 mm or more;
[7] The container according to any one of [1] to [6], wherein an object to be insulated is accommodated in the vicinity of the bottom wall, an ice pack is accommodated closer to the opening than the object to be insulated, and a heat insulating material is accommodated closer to the opening than the ice pack;
[8] A container comprising: an inner container; and an outer container that accommodates the inner container, wherein an opening of the inner container formed by a side wall of the inner container extending from a bottom wall of the inner container is located opposite to the bottom wall of the inner container in a longitudinal direction of the inner container, a bottom wall of the outer container is located opposite to the bottom wall of the inner container in the longitudinal direction of the inner container, and an opening of the outer container formed by a side wall of the outer container extending from the bottom wall of the outer container is located opposite to the opening of the inner container in the longitudinal direction of the inner container;
[9] The container according to [8], wherein a ratio of a length from the bottom wall of the inner container to the opening of the inner container formed by the side wall of the inner container to a square root of an area of the opening of the inner container ((length from bottom wall of inner container to opening of inner container (mm))/(square root of area of opening of inner container (mm))) is 3.75 or more;
[10] The container according to [8] or [9], wherein the opening of the inner container is covered with a lid of the inner container, and the opening of the outer container is covered with a lid of the outer container;
[11] The container according to any one of [8] to [10], wherein an outer shape of the inner container is formed perpendicular to the bottom wall of the inner container so as to extend linearly from the bottom wall of the inner container to an opening end of the inner container, the inner container is accommodated in an accommodating portion of the outer container formed by the bottom wall of the outer container and the side wall of the outer container, and the accommodating portion of the outer container is formed perpendicular to the bottom wall of the outer container so as to extend linearly from the bottom wall of the outer container to an opening end of the outer container;
[12] The container according to any one of [8] to [11], wherein at least a part of the inner container is accommodated in the accommodating portion of the outer container formed by the bottom wall and the side wall of the outer container, and a gap between the accommodating portion of the outer container and the outer shape of the inner container is 3 mm or less;
[13] A container comprising: a bottom wall; and a side wall, the container comprising: an object to be insulated accommodated in the vicinity of the bottom wall; an ice pack and/or a heat insulating material accommodated closer to an opening formed by the side wall than the object to be insulated; a sensor that is able to measure environmental information of the object to be insulated or a vicinity of the object to be insulated, or a parameter capable of identifying the environmental information; and a receiving part that receives the environmental information measured by the sensor, the parameter measured by the sensor, or the environmental information identified from the parameter;
[14] The container according to [13], comprising a display part that displays the received parameter or the received environmental information;
[15] The container according to [13] or [14], comprising a storage part that stores the received parameter or the received environmental information in association with time;
[16] The container according to any one of [13] to [15], wherein the parameter measured by the sensor, the environmental information identified from the parameter, or the environmental information measured by the sensor is transmittable to the receiving part via communication;
[17] The container according to any one of [13] to [16], wherein the environmental information is a temperature;
[18] A container comprising: a bottom wall; and a side wall, the container comprising: an object to be insulated accommodated in the vicinity of the bottom wall; an ice pack and/or a heat insulating material accommodated closer to an opening formed by the side wall than the object to be insulated; a sensor that is able to measure a temperature of the object to be insulated or a vicinity of the object to be insulated, or a parameter capable of identifying the temperature; and a heat generator accommodated in the vicinity of the object to be insulated, wherein initiation of heat generation and/or termination of the heat generation, or intensity of the heat generation by the heat generator is controllable according to the measured temperature or the temperature identified from the measured parameter;
[19] The container according to [18], wherein the initiation of heat generation and/or the termination of the heat generation, or the intensity of the heat generation by the heat generator is controllable so as to cause the temperature of the object to be insulated or the vicinity of the object to be insulated to be within a predetermined range, or so as to cause the parameter capable of identifying the temperature to be within a predetermined range;
[20] A method of insulating an object to be insulated by using a container including a bottom wall and a side wall, the bottom wall and the side wall having a heat insulating property, the method comprising: accommodating the object to be insulated in the vicinity of the bottom wall; and accommodating an ice pack closer to an opening formed by the side wall than the object to be insulated for insulation;
[21] The method according to [20], further comprising accommodating a heat insulating material closer to the opening than the ice pack;
[22] The method according to [20] or [21], comprising accommodating the object to be insulated in a predetermined first region, wherein a length of the predetermined first region in a longitudinal direction from the bottom wall to the opening is 1/5 or less with respect to a length from the bottom wall to the opening;
[23] The method according to any one of [20] to [22], comprising accommodating the ice pack in a predetermined second region, wherein a length of the predetermined second region in the longitudinal direction from the bottom wall to the opening is 1/2 or more with respect to the length from the bottom wall to the opening;
[24] The method according to any one of [20] to [23], comprising accommodating the object to be insulated packaged with a metal having a thermal conductivity at 0°C of 100 W/mK or more;
[25] The method according to any one of [20] to [24], wherein the ice pack contracts upon freezing, or has a volume expansion due to freezing that is less than 10%;
[26] The method according to any one of [20] to [25], wherein a ratio of a length from the bottom wall to the opening formed by the side wall to a square root of an area of the opening ((length from bottom wall to opening (mm))/(square root of area of opening (mm))) is 3.75 or more;
[27] The method according to [20] to [26], comprising accommodating the container in an outer container so as to locate the opening of the container formed by the side wall of the container extending from the bottom wall of the container, opposite to the bottom wall of the container in a longitudinal direction of the container, locate a bottom wall of the outer container opposite to the bottom wall of the container in the longitudinal direction of the container, and locate an opening of the outer container formed by a side wall of the outer container extending from the bottom wall of the outer container, opposite to the opening of the container in the longitudinal direction of the container;
[28] The method according to any one of [20] to [27], comprising accommodating the object to be insulated in a pouch container, accommodating the pouch container in an thermal equalization box, and accommodating the thermal equalization box in the container, accommodating the object to be insulated in the thermal equalization box, accommodating the thermal equalization box in the pouch container, and accommodating the pouch container in the container, accommodating the object to be insulated in the thermal equalization box, accommodating the thermal equalization box in the container, and accommodating the container in the pouch container, or accommodating the object to be insulated in an air-tight thermal equalization box;
[29] The method according to any one of [20] to [28], comprising accommodating the object to be insulated or the thermal equalization box accommodating the object to be insulated, and the ice pack and/or the heat insulating material in a bag, and accommodating the bag in the container;
[30] The method according to any one of [29], comprising integrating the thermal equalization box accommodating the object to be insulated and the ice pack, and accommodating the integrated thermal equalization box and ice pack in the container;
[31] The method according to any one of [20] to [30], comprising storing, at a predetermined temperature, the object to be insulated fixed by being inserted into a hole provided in a metal block around which a heat insulating material is at least partially disposed, and accommodating the metal block and the object to be insulated stored at the predetermined temperature in the container in the presence of the ice pack;
[32] The method according to any one of [20] to [31], wherein an accommodating portion formed by the bottom wall and the side wall is formed perpendicular to the bottom wall so as to extend linearly from the bottom wall to an opening end, or the accommodating portion formed by the bottom wall and the side wall is formed so as not to cause a plane parallel to the opening of a space by the accommodating portion to narrow from a bottom surface to the opening end.

### Advantageous Effects of Invention

According to the present invention, it is possible to provide a container having an excellent heat retention effect. Moreover, according to the present invention, it is possible to provide a method having an excellent heat retention effect.

### Brief Description of Drawings

Fig. 1 is an example of a cross-sectional view of a container according to an embodiment of the present invention.
Fig. 2 is an enlarged cross-sectional view of a vacuum space of a container according to an embodiment of the present invention.
Fig. 3 is a drawing for explaining a method of insulating an object to be insulated according to an embodiment of the present invention.
Fig. 4 is an enlarged cross-sectional view, as viewed from a side surface of the container, of a container accommodating a specimen container according to an embodiment of the present invention.
Fig. 5 is a drawing for explaining a method of insulating a specimen container according to an embodiment of the present invention.
Fig. 6 is a drawing illustrating an ice pack and an thermal equalization box in a case where the thermal equalization box accommodating an object to be insulated and the ice pack are integrated according to an embodiment of the present invention.
Fig. 7 is a cross-sectional view of a container according to an embodiment of the present invention.
Fig. 8 is a cross-sectional view of a container according to an embodiment of the present invention.

### Description of Embodiments

Hereinafter, embodiments of the invention will be described with reference to the drawings. However, the invention is not limited to the following embodiments without departing from the spirit and scope of the invention. It should be noted that the description regarding the effects shows an aspect of the effects of the embodiments of the invention and is not limited to those specifically mentioned herein.

An object to be insulated accommodated in a container of the present invention is not particularly limited. The object to be insulated may be, for example, any of a gas, a liquid, or a solid. Examples of the object to be insulated include a specimen collected from a human body such as blood or urine, a processed cell obtained by processing a human or animal cell, and a pharmaceutical product such as a preparation. Such an object to be insulated can be accommodated in the container of the present invention after being accommodated in a package, a small container (container different from the container of the present invention), or the like. Hereinafter, the "object to be insulated" is a concept including not only contents (for example, a specimen, a processed cell, or a pharmaceutical product) accommodated in the package or the small container, but also the package or the small container accommodated in the container of the present invention together with the contents.

The object to be insulated is not limited to a particular shape. Examples of the shape of the object to be insulated include a quadrilateral-prismatic shape, a cylindrical shape, and a spherical shape. The object to be insulated preferably has a shape conforming to the shape of an accommodating portion of the container. In a case where a bottom surface of the accommodating portion has a circular shape, it is preferable that a bottom surface of the object to be insulated also has a circular shape, and the object to be insulated also has a cylindrical shape. In this case, the object to be insulated is, for example, one obtained by accommodating contents in a cylindrical small container. In a case where the bottom surface of the accommodating portion has a rectangular shape, it is preferable that the bottom surface of the object to be insulated also has a rectangular shape, and the object to be insulated also has a quadrilateral-prismatic shape (rectangular parallelepiped). In this case, the object to be insulated is, for example, one obtained by accommodating contents in a quadrilateral-prismatic small container.

The object to be insulated is not limited to a particular size. The container of the present invention can be suitably used for an object to be insulated having a bottom surface area of 5,000 mm² or less, more suitably used for an object to be insulated having a bottom surface area of 4,000 mm² or less, and still more suitably used for an object to be insulated having a bottom surface area of 3,000 mm² or less. The container of the present invention can be suitably used for an object to be insulated having a volume of 600,000 mm³ or less, more suitably used for an object to be insulated having a volume of 320,000 mm³ or less, and still more suitably used for an object to be insulated having a volume of 120,000 mm³ or less.

In the present invention, heat insulation is a concept including the case of keeping a temperature inside the container lower than a temperature outside the container (so-called cold insulation) and the case of keeping the temperature inside the container higher than the temperature outside the container.

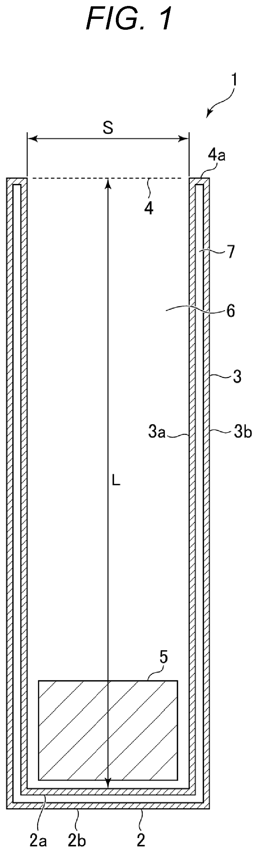

Fig. 1 is an example of a cross-sectional view of a container as viewed from a side surface according to an embodiment of the present invention. Fig. 1 is a cross-sectional view of a container 1 having a cylindrical outer shape and including therein an accommodating portion having the same cylindrical shape. In addition, the cross-sectional view is a cross-sectional view taken along a plane perpendicular to a circle that is a bottom surface of a cylinder constituting the outer shape of the container 1 and passing through the center of the circle.

The container 1 is not limited to a particular shape, but, for example, preferably has a cylindrical or quadrilateral-prismatic shape. The cylindrical or quadrilateral-prismatic shape may be not only a perfect cylinder or quadrilateral prism, but also a shape that can be recognized as a cylinder or quadrilateral prism by a user of the container 1. A bottom wall 2 of the container 1 may have a planar or curved surface shape. The planar or curved surface shape may be not only a perfect plane or curved surface, but also a shape that can be recognized as a plane or curved surface by the user of the container 1. The bottom wall 2 in a case where the bottom wall 2 has a planar shape is not limited to a particular shape, but, for example, preferably has a circular, rectangular, or square shape. The circular, rectangular, or square shape may be not only a perfect circular, rectangular, or square shape, but also a shape that can be recognized as a circular, rectangular, or square shape by the user of the container 1.

A side wall 3 of the container 1 is configured to extend from the bottom wall 2 toward an opening 4. In a case where the bottom wall 2 has a planar shape, the side wall 3 is preferably configured to extend in a perpendicular direction from the bottom wall 2. In a case where the bottom wall 2 has a circular shape, the side wall 3 has a curved surface shape. An object to be insulated 5, or an ice pack or a heat insulating material described later can be accommodated in the container 1 from the opening 4.

An accommodating portion 6 of the container 1 for accommodating the object to be insulated 5 is not limited to a particular shape, but preferably has a shape corresponding to the shape of the container 1. That is, in a case where the container 1 has a cylindrical shape, the accommodating portion 6 also preferably has a cylindrical shape, and in a case where the container 1 has a quadrilateral-prismatic shape, the accommodating portion 6 also preferably has a quadrilateral-prismatic shape.

The ratio of a length L from the bottom wall 2 to the opening 4 formed by the side wall 3 to the square root of an area S of the opening 4 ((length from bottom wall to opening (mm))/(square root of area of opening (mm)), that is, L/√S) is preferably 3.75 or more, preferably 4 or more, preferably 4.5 or more, more preferably 5 or more, still more preferably 5.5 or more, and particularly preferably 6 or more.

In a typical heat insulating container whose bottom wall and side wall have a heat insulating property, the heat insulating performance decreases as the area of the opening increases. The bottom wall 2 and the side wall 3 have a higher heat insulating property than the opening 4. Thus, if the accommodating portion 6 of the container has the same volume, the heat retention effect can be enhanced by reducing the area S of the opening 4 and increasing a distance from the opening 4 to the object to be insulated 5.

In the container 1 of the present invention, the ratio of the length L from the bottom wall 2 to the opening 4 formed by the side wall 3 to the square root of the area S of the opening 4 is increased, so that heat transfer from the outside of the container 1 to the object to be insulated 5 present in the vicinity of the bottom wall 2 is reduced, and the heat retention effect can be enhanced even in a case where the object to be insulated 5 has a small size.

The ratio of the length L from the bottom wall 2 to the opening 4 formed by the side wall 3 to the square root of the area S of the opening 4 ((length from bottom wall to opening (mm))/(square root of area of opening (mm)), that is, L/√S) can be 50 or less, 40 or less, and 30 or less. When the length L from the bottom wall 2 to the opening 4 increases, it may be difficult to handle the container 1, or the transportation cost may increase.

The ratio of the area S of the opening 4 formed by the side wall 3 to the length L from the bottom wall 2 to the opening 4 ((area of opening (mm²))/(length from bottom wall to opening (mm))), that is, S/L is preferably 20 (mm) or less, preferably 17 (mm) or less, preferably 14 (mm) or less, preferably 11 (mm) or less, and preferably 8 (mm) or less.

The ratio of the area S of the opening 4 formed by the side wall 3 to the length L from the bottom wall 2 to the opening 4 ((area of opening (mm²))/(length from bottom wall to opening (mm))) can be 3 (mm) or more, 4 (mm) or more, and 5 (mm) or more. When the length L from the bottom wall 2 to the opening 4 increases, it may be difficult to handle the container 1, or the transportation cost may increase.

The area S of the opening 4 is preferably 5,000 mm² or less, more preferably 4,000 mm² or less, and still more preferably 3,000 mm² or less regardless of the shape of the opening 4 or the bottom wall 2. The shape and the area S of the opening 4 can be designed or selected in accordance with the size or shape of the object to be insulated 5.

The length L from the bottom wall 2 to the opening 4 is preferably 150 mm or more, more preferably 230 mm or more, and still more preferably 300 mm or more. When the length L from the bottom wall 2 to the opening 4 decreases, the heat retention effect on the object to be insulated 5 in the vicinity of the bottom wall 2 tends to decrease.

The bottom wall 2 and the side wall 3 have a heat insulating property. As a method for providing the heat insulating property to the bottom wall 2 and/or the side wall 3, a known method can be used, and examples thereof include, but are not particularly limited to, a method in which a vacuum space 7 is included in the bottom wall 2 and/or the side wall 3, and a method in which a material having a high heat insulating property is used for the bottom wall 2 and/or the side wall 3. As the material having a high heat insulating property, for example, a foam-based heat insulating material, a fiber-based heat insulating material, an aerogel, and a vacuum heat insulating material obtained by including the above heat insulating material in a film and decompressing the inside can be used. In a case where the vacuum space 7 is included in the bottom wall 2 and the side wall 3, the bottom wall 2 and the side wall 3 can be integrally formed by processing one metal plate or by separately shaping the bottom wall and the side surface and welding them together. In addition, an integrated vacuum space may be formed in the bottom wall 2 and the side wall 3.

In a case where the vacuum space 7 is included in the bottom wall 2, the bottom wall 2 includes a bottom inner wall 2a constituting the accommodating portion 6, a bottom outer wall 2b constituting the outer shape of the container 1, and the vacuum space 7. The vacuum space 7 is formed from the bottom inner wall 2a and the bottom outer wall 2b. In addition, in a case where the vacuum space 7 is included in the side wall 3, the side wall 3 includes a side inner wall 3a constituting the accommodating portion 6, a side outer wall 3b constituting the outer shape of the container 1, and the vacuum space 7. In addition, the vacuum space 7 is formed from the side inner wall 3a and the side outer wall 3b.

The side inner wall 3a forming the vacuum space 7 is not limited to a particular thickness, but the thickness is preferably 0.25 mm or less, more preferably 0.2 mm or less, still more preferably 0.15 mm or less, and yet more preferably 0.1 mm or less. The bottom outer wall 2b and the side outer wall 3b forming the vacuum space 7 are also not limited to a particular thickness, but the thickness is preferably 0.55 mm or less, more preferably 0.45 mm or less, more preferably 0.35 mm or less, and still more preferably 0.25 mm or less. When the side inner wall 3a, the bottom outer wall 2b, or the side outer wall 3b forming the vacuum space 7 becomes thick, heat is conducted from the outside of the container 1 to the inside of the container 1 through the side inner wall 3a, the bottom outer wall 2b, and/or the side outer wall 3b. Thus, the heat retention effect on the object to be insulated 5 tends to decrease.

It is preferable to provide surface(s) facing the vacuum space 7 of the bottom inner wall 2a, the bottom outer wall 2b, the side inner wall 3a and/or the side outer wall 3b forming the vacuum space 7 with a function of enhancing radiative insulation of the vacuum space 7. As a result, heat conduction due to radiation can be reduced. Only the surfaces of the bottom inner wall 2a and the side inner wall 3a facing the vacuum space 7 may be provided with the function of enhancing the radiative insulation of the vacuum space 7, only the surfaces of the bottom outer wall 2b and the side outer wall 3b facing the vacuum space 7 may be provided with the function of enhancing the radiative insulation of the vacuum space 7, or both the surfaces of the bottom inner wall 2a and the bottom outer wall 2b facing the vacuum space 7 and the surfaces of the side inner wall 3a and the side outer wall 3b facing the vacuum space 7 may be provided with the function of enhancing the radiative insulation of the vacuum space 7.

Examples of a method for providing the function of enhancing the radiative insulation include a method of plating the surface(s) of substrate(s) of the bottom inner wall 2a, the bottom outer wall 2b, the side inner wall 3a, and/or the side outer wall 3b with a metal having a radiative insulation function such as copper, silver, gold, aluminum, platinum, nickel, rhodium, or germanium, a method of forming a film of the metal having a radiative insulation function on the surface(s) of the substrate(s) of the bottom inner wall 2a, the bottom outer wall 2b, the side inner wall 3a, and/or the side outer wall 3b by vapor deposition or sputtering, and a method of adhering or winding foil of the metal having a radiative insulation function or a heat insulating material composed of multiple layers having a radiative insulation function onto the surface(s) of the substrate(s) of the bottom inner wall 2a, the bottom outer wall 2b, the side inner wall 3a, and/or the side outer wall 3b. In a case where the surface(s) of the substrate(s) of the bottom inner wall 2a, the bottom outer wall 2b, the side inner wall 3a, and/or the side outer wall 3b is plated with the metal having a radiative insulation function, it is not necessary that the entire surface facing the vacuum space 7 is plated. For example, it is preferable that plating is applied to 70% or more of the total area of each surface of the bottom inner wall 2a, the bottom outer wall 2b, the side inner wall 3a, and/or the side outer wall 3b facing the vacuum space 7, it is more preferable that plating is applied to 80% or more of the total area, and it is still more preferable that plating is applied to 90% or more of the total area.

An inner wall forming the accommodating portion 6 includes the bottom inner wall 2a having a circular shape and the side inner wall 3a having a cylindrical shape. The bottom inner wall 2a and the side inner wall 3a can be produced separately and joined together by welding or the like. At this time, the bottom inner wall 2a and the side inner wall 3a may be joined together by providing the surface of the bottom inner wall 2a facing the vacuum space 7 with the function of enhancing the radiative insulation (for example, plating the surface with a metal such as silver) without providing the surface of the side inner wall 3a facing the vacuum space 7 with the function of enhancing the radiative insulation. The bottom inner wall 2a and the side inner wall 3a can be joined together by providing the surface of the side inner wall 3a facing the vacuum space 7 with the function of enhancing the radiative insulation (for example, plating the surface with a metal such as silver) without providing the surface of the bottom inner wall 2a facing the vacuum space 7 with the function of enhancing the radiative insulation. Any of the surfaces of the bottom inner wall 2a and the side inner wall 3a facing the vacuum space 7 can be provided with the function of enhancing the radiative insulation (for example, can be plated with a metal such as silver).

Similarly to the inner wall, an outer wall forming the outer shape of the container 1 includes the bottom outer wall 2b having a circular shape and the side outer wall 3b having a cylindrical shape. The bottom outer wall 2b and the side outer wall 3b can be produced separately and joined together by welding or the like. At this time, the bottom outer wall 2b and the side outer wall 3b may be joined together by providing the surface of the bottom outer wall 2b facing the vacuum space 7 with the function of enhancing the radiative insulation (for example, plating the surface with a metal such as silver) without providing the surface of the side outer wall 3b facing the vacuum space 7 with the function of enhancing the radiative insulation. The bottom outer wall 2b and the side outer wall 3b can be joined together by providing the surface of the side outer wall 3b facing the vacuum space 7 with the function of enhancing the radiative insulation (for example, plating the surface with a metal such as silver) without providing the surface of the bottom outer wall 2b facing the vacuum space 7 with the function of enhancing the radiative insulation. Any of the surfaces of the bottom outer wall 2b and the side outer wall 3b facing the vacuum space 7 can be provided with the function of enhancing the radiative insulation (for example, can be plated with a metal such as silver).

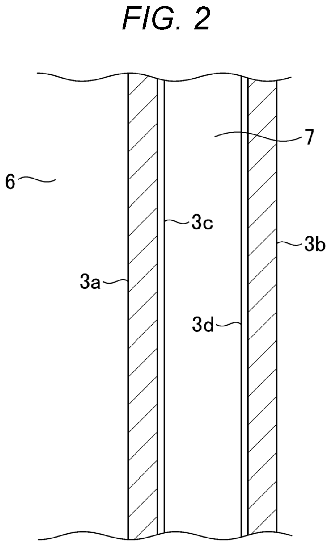

Fig. 2 is an enlarged view of a vacuum space of a container according to an embodiment of the present invention. In Fig. 2, a plating layer 3c (for example, a plating layer of silver) is provided on the surface of the side inner wall 3a facing the vacuum space 7, and a plating layer 3d (for example, a plating layer of silver) is provided on the surface of the side outer wall 3b facing the vacuum space 7.

The bottom wall 2 and/or the side wall 3 forming the vacuum space 7 is not limited to a particular material, but, for example, a material having a low thermal conductivity such as stainless steel, titanium, a titanium alloy, or glass can be used.

As illustrated in Fig. 1, the accommodating portion 6 formed by the bottom wall 2 and the side wall 3 is formed perpendicular to the bottom wall 2 so as to extend linearly from the bottom wall 2 to an opening end 4a. A cross section perpendicular to the bottom wall 2 of the side inner wall 3a on the inner side of the side wall 3 is formed linearly from the bottom wall 2 to the opening end 4a. That is, the side inner wall 3a forming the accommodating portion 6 is formed so as to extend perpendicular to the bottom wall 2 from the bottom wall 2 to the opening 4. In this case, the surface of the side inner wall 3a may have unevenness.

In comparison with a heat insulating container having a shape in which the vicinity of the opening is narrowed, the accommodating portion 6 formed by the bottom wall 2 and the side wall 3 is formed perpendicular to the bottom wall 2 so as to extend linearly from the bottom wall 2 to the opening end 4a, or the side wall 3 is formed such that the cross section of the side inner wall 3a perpendicular to the bottom wall 2 is linear from the bottom wall 2 to the opening end 4a. Thus, the object to be insulated 5 can be easily taken in and out of the container 1 in a case where the object to be insulated 5 does not have fluidity like a liquid or has low fluidity. In addition, unlike the heat insulating container having the shape in which the vicinity of the opening is narrowed, when the object to be insulated 5 is accommodated in the container 1, a gap is less likely to be generated between the side wall 3a and the object to be insulated 5. As a result, the position of the object to be insulated 5 is easily fixed, and the object to be insulated 5 can be prevented from colliding with the inner wall of the container 1 during transportation. Moreover, by using the container 1 including the opening 4 having a size and a shape adapted to the size of the object to be insulated 5, no wasteful space is generated inside the container 1 in the case of accommodating the object to be insulated 5 having the same size as compared with the heat insulating container having the shape in which the vicinity of the opening is narrowed, so that the volume of the container 1 can be reduced.

Furthermore, since the accommodating portion 6 formed by the bottom wall 2 and the side wall 3 is formed perpendicular to the bottom wall 2 so as to extend linearly from the bottom wall 2 to the opening end 4a, or since the cross section of the side inner wall 3a perpendicular to the bottom wall 2 is formed linearly from the bottom wall 2 to the opening end 4a, it is possible to accommodate more solid ice packs, and to accommodate a larger solid ice pack than the heat insulating container having the shape in which the vicinity of the opening is narrowed as long as the area of the bottom wall 2 is the same, to extend a cold-insulatable period. It is also possible to accommodate a larger object to be insulated 5 or more objects to be insulated 5 in the container 1, so that the degree of freedom of the size and amount of the object to be cold-insulated 5 increases, and the amount of objects to be cold-insulated that can be kept cold and transported per one time can be increased.

In addition, the accommodating portion 6 formed by the bottom wall 2 and the side wall 3 is formed such that a plane parallel to the opening 4 of a space formed by the accommodating portion 6 does not narrow from the bottom surface 2 to the opening end 4a. The cross section of the side inner wall 3a perpendicular to the bottom wall 2 may be formed such that the opening 4 widens at least in a part from the bottom wall 2 to the opening end 4a. In this case, it is preferable that the cross section of the side inner wall 3a perpendicular to the bottom wall 2 extends without narrowing the opening 4 in a part from the bottom wall 2 to the opening end 4a. That is, the side inner wall 3a can be configured such that at least a part of the side inner wall 3a extends linearly from the bottom wall 2 toward the opening end 4a without narrowing toward the inside of the container 1, and at least a part of the side inner wall 3a widens to the outside of the container 1. In this case, the side inner wall 3a may be configured to extend linearly from the bottom wall 2 toward the opening end 4a, and widen to the outside of the container 1 in the vicinity of the opening end 4a.

As described above, the side inner wall 3a is configured such that at least a part of the side inner wall 3a extends linearly from the bottom wall 2 toward the opening end 4a without narrowing toward the inside of the container 1, and at least a part of the side inner wall 3a widens to the outside of the container 1. Thus, the object to be insulated 5 can be easily taken in and out of the container 1 in a case where the object to be insulated 5 does not have fluidity like a liquid or has low fluidity. In addition, when the object to be insulated 5 is accommodated in the container 1, a gap is less likely to be generated between the side wall 3a and the object to be insulated 5. As a result, the position of the object to be insulated 5 is easily fixed, and the object to be insulated 5 can be prevented from colliding with the inner wall of the container 1 during transportation. Furthermore, the side inner wall 3a is configured such that at least a part of the side inner wall 3a extends linearly from the bottom wall 2 toward the opening end 4a without narrowing toward the inside of the container 1, and at least a part of the side inner wall 3a widens to the outside of the container 1. This makes it possible to accommodate more solid ice packs than the heat insulating container having the shape in which the vicinity of the opening is narrowed as long as the area of the bottom wall 2 is the same. This also makes it possible to accommodate a larger solid ice pack than the heat insulating container having the shape in which the vicinity of the opening is narrowed as long as the area of the bottom wall 2 is the same. Thus, cold insulating performance can be enhanced. It is also possible to accommodate a larger object to be insulated 5 or more objects to be insulated 5 in the container 1, so that the degree of freedom of the size and amount of the object to be cold-insulated 5 increases, and the transportable amount per one time can be increased.

The area S of the opening 4 is preferably not smaller than the area of a bottom surface of the bottom wall 2 facing the accommodating portion 6, and may be the same as or larger than the area of the bottom surface.

In the container 1, it is preferable to accommodate the object to be insulated 5 in the vicinity of the bottom wall 2. Another material such as a cushioning material may be present between the object to be insulated 5 and the inner wall of the bottom wall 2.

It is preferable that the ice pack is accommodated closer to the opening 4 than the object to be insulated 5. In a case where the bottom wall 2 and the side wall 3 have a heat insulating function by including the vacuum space 7 or the like, heat is transferred from the opening 4 of the container 1 to the bottom wall 2. Therefore, by providing the ice pack closer to the opening 4 than the object to be insulated 5, heat transfer to the object to be insulated 5 can be reduced, and the heat retention effect on the object to be insulated 5 is improved.

It is preferable that the heat insulating material is accommodated closer to the opening 4 than the ice pack. The heat insulating material is accommodated in the vicinity of the opening 4 as compared with the object to be insulated 5 and the ice pack. Since heat is transferred from the opening 4 of the container 1 to the bottom wall 2, heat transfer to the ice pack can be reduced by accommodating the heat insulating material in the vicinity of the opening 4, and the heat retention effect on the object to be insulated 5 is improved.

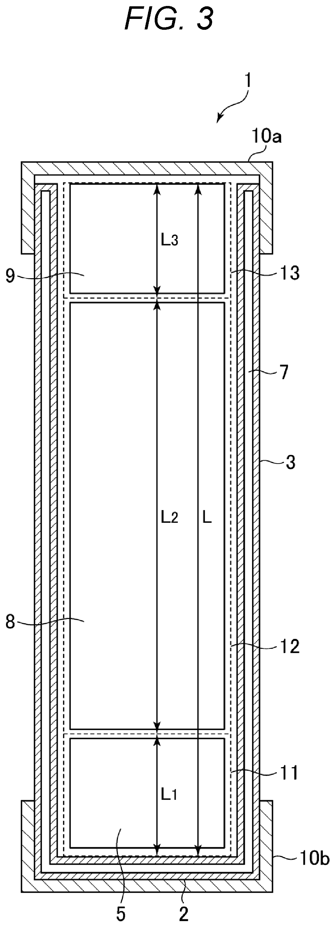

Matters described below with reference to Figs. 3 to 8 can also be applied to a container 1 having a different property, a different shape, and a different size from those of the container 1. For example, the matters can also be applied to a container in which at least one of the bottom wall or the side wall does not have a heat insulating property, a container in which the ratio of the length L from the bottom wall 2 to the opening 4 formed by the side wall 3 to the square root of the area S of the opening 4 ((length from bottom wall to opening (mm))/(square root of area of opening (mm))) is smaller than 3.75, a container in which the accommodating portion formed by the bottom wall and the side wall is formed such that the plane parallel to the opening of the space formed by the accommodating portion narrows at least partially from the bottom surface to the opening end, and the like.

Fig. 3 is a drawing for explaining a method of insulating an object to be insulated according to an embodiment of the present invention. Fig. 3 is an example of a cross-sectional view of a container according to an embodiment of the present invention as viewed from a side surface. Fig. 3 is a cross-sectional view of a container 1 having a cylindrical outer shape and including therein an accommodating portion having the same cylindrical shape. In addition, the cross-sectional view is a cross-sectional view taken along a plane perpendicular to a circle that is a bottom surface of a cylinder constituting the outer shape of the container 1 and passing through the center of the circle.

A region in the vicinity of the bottom wall 2 for accommodating the object to be insulated 5 is defined as a first region 11. A length L₁ of the first region 11 in a longitudinal direction from the bottom wall 2 toward the opening 4 is preferably 1/2 or less, more preferably 1/3 or less, and still more preferably 1/5 or less with respect to the length L from the bottom wall 2 to the opening 4. By reducing the ratio of the length L₁ of the first region 11 to the length L from the bottom wall 2 to the opening 4, a distance from the opening 4 to the object to be insulated 5 can be increased, so that the amount of conductive heat transfer to the object to be insulated inversely proportional to the conductive heat transfer distance can be reduced, and more ice packs can be accommodated.

The length L₁ of the first region 11 is preferably 1/20 or more, more preferably 1/15 or more, and still more preferably 1/10 or more with respect to the length L from the bottom wall 2 to the opening 4. If the ratio of the length L₁ of the first region 11 to the length L from the bottom wall 2 to the opening 4 is too small, the size of the accommodatable object to be insulated 5 tends to be small, and the ratio of the length L from the bottom wall 2 to the opening 4 to the area S of the opening 4 of the container 1 becomes too large, which may make it difficult to handle the container 1.

A region closer to the opening 4 than the first region 11 for accommodating an ice pack 8 is defined as a second region 12. The second region 12 is located closer to the bottom wall 2 than a third region 13 described later. A length L₂ of the second region 12 in the longitudinal direction from the bottom wall 2 toward the opening 4 is preferably 1/3 or more, more preferably 1/2 or more, and still more preferably 5/8 or more with respect to the length L from the bottom wall 2 to the opening 4.

The ice pack 8 is not particularly limited, but a known ice pack can be used. As the ice pack 8, for example, dry ice or ice (ice cubes) can be used. As the ice pack 8, an ice pack accommodated in a hard case or an ice pack accommodated in a soft bag can also be used. It is preferable that the volume of the ice pack 8 does not expand at the time of freezing or the volume of the ice pack 8 contracts at the time of freezing. In addition, even if the volume of the ice pack 8 expands due to freezing, it is preferable that the volume increase due to freezing is less than 10% with respect to the volume of the ice pack 8 before freezing. For example, in a case where the object to be insulated 5 and the ice pack in a liquid state before freezing are accommodated in the container 1 at normal temperature, and are frozen at a temperature equal to or lower than a freezing point of the ice pack 8 so as to cause the object to be insulated 5 to have a desired heat insulating temperature, the container 1 may be damaged by the ice pack 8 that expands at the time of freezing. In this case, especially when the ratio of the length L from the bottom wall 2 to the opening 4 formed by the side wall 3 to the square root of the area S of the opening 4 increases, the container 1 is easily damaged. In addition, even in a case where only the ice pack 8 is frozen and then the frozen ice pack 8 is accommodated in the container 1, the ice pack 8 that expands at the time of freezing may not be able to be accommodated in the container 1.

A region closer to the opening 4 than the second region 12 for accommodating a heat insulating material 9 is defined as the third region 13. A length L₃ of the third region 13 in the longitudinal direction from the bottom wall 2 toward the opening 4 is preferably 1/30 or more, more preferably 1/20 or more, and still more preferably 1/10 or more with respect to the length L from the bottom wall 2 to the opening 4. If the ratio of the length L₃ of the third region 13 to the length L from the bottom wall 2 to the opening 4 is too small, the amount of intruding heat passing through the heat insulating material 9 increases, and a sufficient heat retention effect may not be obtained.

The length L₃ of the third region 13 is preferably 1/5 or less, more preferably 1/7 or less, and still more preferably 1/9 or less with respect to the length L from the bottom wall 2 to the opening 4. If the ratio of the length L₃ of the third region 13 to the length L from the bottom wall 2 to the opening 4 is too large, the ice pack 8 cannot be sufficiently accommodated in the container 1, and a sufficient heat retention effect may not be obtained.

Fig. 3 illustrates a case where the object to be insulated 5 is accommodated in the vicinity of the bottom wall 2 of the container 1, the ice pack 8 is accommodated closer to the opening 4 than the object to be insulated 5, and the heat insulating material 9 is further accommodated closer to the opening 4 than the ice pack 8. However, the object to be insulated 5 may be accommodated in the vicinity of the bottom wall 2 of the container 1 and the ice pack 8 may be accommodated closer to the opening 4 than the object to be insulated 5 without using the heat insulating material 9. In this case, it is desired that the ice pack 8 is disposed/accommodated so as to fill the space up to the opening 4.

The container 1 can be covered with a lid 10a at the opening 4. The lid 10a has a circular bottom surface and has a cylindrical recess. The container 1 can be covered by fitting an upper portion of the container 1 on the opening 4 side into the recess of the lid 10a. The lid 10a is not limited to a particular material, but can be made of a material having elasticity. Examples of the material of the lid 10a include rubber. By using a rubber lid as the lid 10a, the lid 10a also functions as a cushioning portion that alleviates an impact generated during transportation of the container 1.

In a case where the lid 10a is made of rubber, the lid 10a has high adhesion to the container 1, and it may be difficult to open and close the container 1 by the lid 10a unless a small hole is formed in the lid 10a, for example. In a case where dry ice is accommodated in the container 1, the lid 10a may be detached from the container 1 unless there is a small hole in the lid 10a. If the lid 10a is fixed to the container 1 in order to prevent the lid 10a from being detached from the container 1, there is a risk of rupture of the container 1. Providing a small hole for ventilation in the lid 10a makes it easy to open and close the container 1 by the lid 10a. Even in a case where dry ice is accommodated in the container 1, the lid 10a is less likely to be detached from the container 1 without fixing the lid 10a to the container 1, and breakage of the container 1 can be prevented. In addition, the lid 10a is not rigidly fixed to the container 1 but is fixed by using rubber adhesion. Thus, if by any chance the internal pressure rises for some reason, the rubber lid 10a is detached, which makes it possible to prevent breakage/rupture of the container 1.

By fitting a lower portion of the container 1 on the bottom wall 2 side into a cylindrical recess of a cushioning portion 10b, the cushioning portion can also be provided on the bottom wall 2 side of the container 1. As the cushioning portion 10b, a material having elasticity (for example, rubber) can be used, and the material of the cushioning portion 10b may be the same as the material of the lid 10a. The cushioning portion 10b is not limited to a particular shape, but may have the same shape as the lid 10a, or may have a shape that covers the side wall 3 up to the vicinity of the lid 10a.

In order to enhance the heat retention effect on the object to be insulated 5, the object to be insulated 5 may be packaged with a material such as a metal having a thermal conductivity at 0°C of 100 W/mK or more, and the packaged object to be insulated 5 may be accommodated in the container 1. Examples of the material having a thermal conductivity at 0°C of 100 W/mK or more include, but are not particularly limited to, aluminum, gold, silver, and copper. For example, the object to be insulated 5 can be packaged by using an thermal equalization box made of the material having a thermal conductivity at 0°C of 100 W/mK or more. In the thermal equalization box, a temperature in the box can be made uniform by using a metal having a high thermal conductivity as the material. Instead of the thermal equalization box, the object to be insulated 5 can be packaged using the material having a thermal conductivity of 100 W/mK or more by, for example, putting the object to be insulated 5 in an aluminum vapor deposition bag (having a large aluminum foil thickness), wrapping the object to be insulated 5 in aluminum foil, or winding an aluminum tape around the object to be insulated 5.

In a case where a specimen or the like is transported as the object to be insulated 5, the specimen is required to be packed in three layers according to the guidelines for proper distribution of pharmaceuticals (GDP guidelines). A so-called bio-pouch (highly leakage-proof bag conforming to standards for infectious substances) is usually used for packing the specimen. The bio-pouch can also be used in transporting the specimen in the container 1.

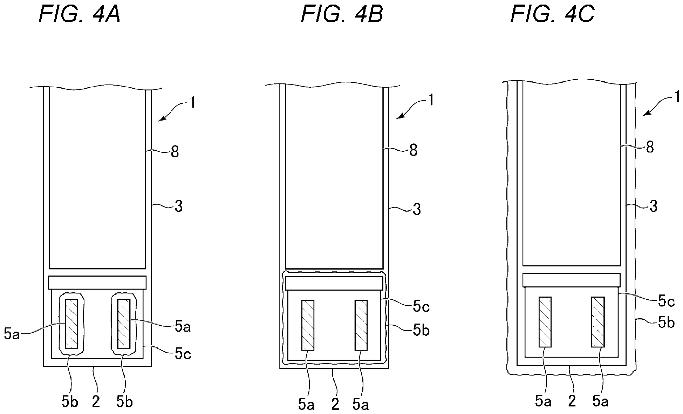

Fig. 4 is an enlarged cross-sectional view, as viewed from a side surface of the container, of a container accommodating a specimen container according to an embodiment of the present invention. Fig. 4 is a cross-sectional view of a container 1 having a cylindrical outer shape and including therein an accommodating portion having the same cylindrical shape. In addition, the cross-sectional view is a cross-sectional view taken along a plane perpendicular to a circle that is a bottom surface of a cylinder constituting the outer shape of the container 1 and passing through the center of the circle.

As illustrated in Fig. 4A, a specimen container 5a enclosing the specimen can be accommodated in a bio-pouch 5b, the bio-pouch 5b can be accommodated in an thermal equalization box 5c, and the thermal equalization box 5c can be accommodated in the container 1. In addition, as illustrated in Fig. 4B, the specimen container 5a can be accommodated in the thermal equalization box 5c, the thermal equalization box 5c can be accommodated in the bio-pouch 5b, and the bio-pouch 5b can be accommodated in the container 1.

Here, as illustrated in Fig. 4C, the specimen container 5a can be accommodated in the thermal equalization box 5c, the thermal equalization box 5c can be accommodated in the container 1, and the entire container 1 can be accommodated in the bio-pouch 5b. However, in a case where the entire container 1 is accommodated in the bio-pouch 5b, it is not preferable to use, as the ice pack 8, a substance that changes from a solid or a liquid to a gas during cold insulation, such as dry ice or liquid nitrogen. That is, although the container 1 can be accommodated in the bio-pouch 5b, it is not preferable to accommodate the container 1 in the bio-pouch 5b in a case where a substance that changes from a solid or a liquid to a gas is used as the ice pack 8.

However, in a case where the bio-pouch 5b is made of a material lacking flexibility, and in a case where the bio-pouch 5b is too large as one for accommodating the thermal equalization box 5c, the bio-pouch 5b is bulky even by being bent. Thus, use of the bio-pouch 5b in the container 1 or the thermal equalization box 5c is likely to cause spatial waste. The spatial waste results in a reduction in the volume of the ice pack or the heat insulating material that can be used, leading to a decrease in cold insulating performance.

In any case of Figs. 4A to 4C, it is preferable to appropriately use the thermal equalization box 5c having an appropriate height according to the shape and size of the specimen container 5a.

Instead of the method of using the bio-pouch as illustrated in Figs. 4A to 4C, the object to be insulated can be accommodated in an air-tight thermal equalization box. As a method for enhancing airtightness of the thermal equalization box, a sealing material such as an O-ring can be used between the opening and the lid.

When the object to be insulated 5 is accommodated in the container 1, the object to be insulated 5 is first cooled to a desired temperature in a freezer or a refrigerator, then taken out from the freezer or the refrigerator, accommodated in the thermal equalization box 5c, and then accommodated in the container 1 having a heat insulating property. Since the work is mostly performed by a person's hand until the object is taken out from the freezer and accommodated in the container 1 having a heat insulating property, the temperature of the object to be insulated 5 may rise due to the temperature of the hand.

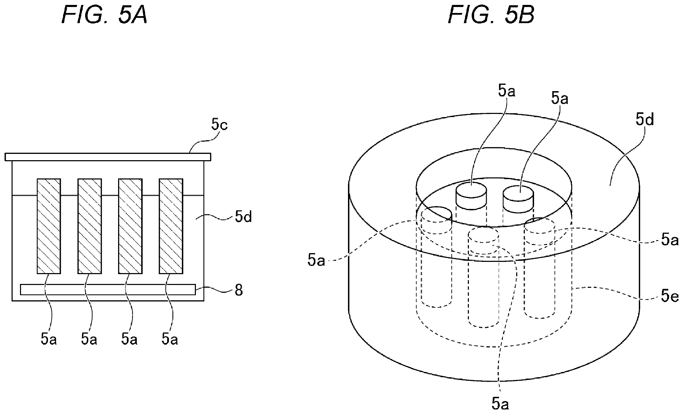

As illustrated in Fig. 5A, the specimen container 5a (object to be insulated) is fixed by a specimen container holding member 5d in a conventional case. The specimen container holding member 5d can be used for fixing the position of the specimen container 5a and cushioning the specimen container 5a. Although there is a heat retention effect by the specimen container holding member 5d, the temperature of the specimen container 5a, which has a small heat capacity, rises before the specimen container 5a is accommodated in the container 1 due to the temperature of the hand or an outside air temperature. In addition, even in a case where the ice pack 8 of Fig. 5A is placed in a sample accommodating container such as the thermal equalization box 5c, there are problems that the manufacturing difficulty of a small pack of the ice pack 8 is high, the effect of maintaining the temperature of the specimen container 5a is not sufficient because the specimen container 5a and the ice pack 8 are not in contact with each other, thermal waste is large because the ice pack 8 and the thermal equalization box 5c are not insulated, and the like.

To solve the problems, the object to be insulated 5 such as the specimen container 5a is fixed by a block of a metal (hereinafter, a metal block) having a high thermal conductivity and having a certain heat capacity, such as an aluminum block, and a bottom surface and/or a side surface of a metal block 5e is insulated by the specimen container holding member 5d. An upper portion of the specimen container 5a not inserted into the metal block 5e can be insulated by an air layer.

The specimen container holding member 5d is not limited to a particular material, but, for example, is preferably made of a resin. The specimen container holding member 5d may also be made of a foam material. The foam material is preferably porous.

For example, there is a method of fixing by inserting a plurality of specimen containers 5a into one metal block 5e as illustrated in Fig. 5B. In the case of Fig. 5B, the specimen container holding member 5d as a heat insulating material is provided on the bottom surface and/or the side surface of one metal block 5e. An upper surface of the metal block 5e is provided with a hole into which the plurality of specimen containers 5a can be inserted. The integrally-formed specimen container holding member 5d can be used.

There is another method of fixing by inserting each of the plurality of specimen containers 5a into a different metal block 5e. In this case, the specimen container holding member 5d is provided on the bottom surfaces and/or the side surfaces of a plurality of metal blocks 5e. An upper surface of each metal block 5e is provided with a hole into which one specimen container 5a can be inserted. Also in this case, the integrally-formed specimen container holding member 5d can be used.

It is preferable that the hole of the metal block 5e has the same shape as the outer shape of the specimen container 5a so that the specimen container 5a can be inserted with no gap therebetween. It is also preferable that not the entire specimen container 5a from the top to the bottom is buried in the hole, but the specimen container 5a is buried in the hole of the metal block 5e up to the middle of the upper side with respect to the center in a height direction of the specimen container 5a, and a part of the upper side of the specimen container 5a is fixed to the metal block 5e in a protruding state without being inserted into the hole.

The specimen container 5a is inserted into and fixed to the hole provided in the metal block 5e around which the specimen container holding member 5d is at least partially disposed, and then the metal block 5e and the specimen container 5a are stored at a predetermined temperature and accommodated in the container 1 or the thermal equalization box 5c in the presence of the ice pack 8. As a result, a temperature rise of the object to be insulated 5 until the specimen container 5a is accommodated in the container 1 can be reduced.

For example, even in a case where the specimen container (cylindrical container having a bottom surface radius of 2.3 cm × a height of 3.0 cm) 5a is stored at -20°C in a freezer using the metal block (cylindrical block having a bottom surface radius of 1.5 cm × a height of 2.0 cm) 5e in Fig. 5B, and then the metal block 5e and the specimen container 5a are taken out from the freezer and accommodated in the container in an environment of an air temperature of 37°C (assuming a case where the entire outer surface of the specimen container 5a has the same temperature as a human body temperature (37°C)), it is possible to maintain the temperature of the specimen container 5a at about - 10°C for about 2 minutes. In addition, also when the metal block 5e and the specimen container 5a are taken out from the container 1 after completion of transportation of the container 1, and are transferred again to a freezer, it is possible to secure a work time of about 2 minutes until the specimen container 5a reaches 0°C or higher.

In a case where the object to be insulated 5 is accommodated in the container 1 and transported, the direction of the object to be insulated 5 in the container 1 in a gravity direction may be required to be within a certain range. The direction of the object to be insulated 5 in the container 1 in the gravity direction is required to be fixed not only in a case where the object to be insulated 5 is kept at a temperature of 0°C or higher but also in a case where the object to be insulated 5 is kept at a temperature lower than 0°C.

For example, since the accommodating portion 6 of the container 1 has a depth in a vertically long shape, the object to be insulated 5 may fall rapidly and collide with the bottom wall 2 at the time of accommodating the object to be insulated 5 in the container 1 in an erected state, which may adversely affect the object to be insulated 5. It is conceivable to incline the container 1 and accommodate the object to be insulated 5 in the container 1. Thus, it may be difficult to keep the direction of the object to be insulated 5 in the gravity direction within a certain range.

In addition, also in the case of taking out the object to be insulated 5 from the container 1, there is a possibility that the container 1 is inclined such that the opening 4 of the container 1 is located on the lower side in order to take out the dry ice or the ice pack. Also in such a case, it may be difficult to keep the direction of the object to be insulated 5 in the gravity direction within a certain range.

To solve the problems, the object to be insulated 5 or the thermal equalization box 5c accommodating the object to be insulated 5, and the ice pack 8 and/or the heat insulating material 9 are accommodated in a bag, and the bag is accommodated in the container. Use of sliding resistance between the bag and the inner wall of the container 1 makes it possible to accommodate the object to be insulated 5 in the container 1 with the opening 4 of the container 1 directed upward without giving an impact to the object to be insulated 5. In addition, by pulling up the bag, it is possible to take out the object to be insulated in the bag from the container 1 with the opening 4 of the container 1 directed upward. The bag is not limited to a particular material.

The object to be insulated 5 or the bag may include a handle. The handle is not particularly limited, but, for example, a string or a wire, a frame having rigidity, or the like can be used as the handle. Use of the handle makes it possible to accommodate the object to be insulated 5 in the container 1 with the opening 4 of the container 1 directed upward without giving an impact to the object to be insulated 5. Use of the handle also makes it possible to take out the object to be insulated in the bag from the container 1 with the opening 4 of the container 1 directed upward.

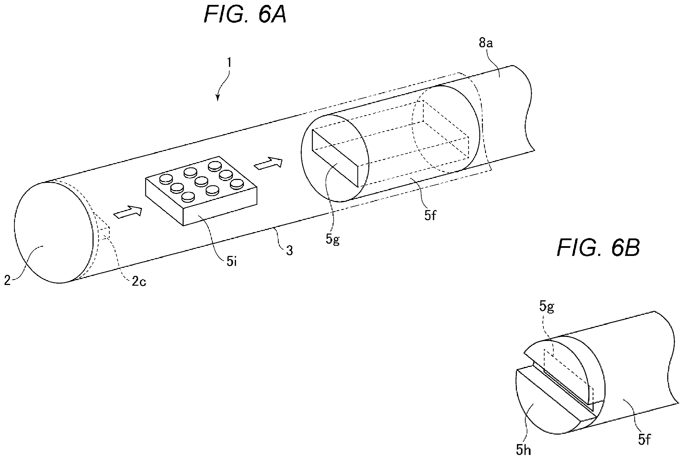

In addition to the method of using the bag including the handle, there is a method of integrating the thermal equalization box accommodating the object to be insulated and the ice pack (or an ice pack accommodating case accommodating the ice pack) and accommodating the integrated thermal equalization box and ice pack in the container. Fig. 6A is a drawing illustrating a relationship among a container, an ice pack, and an thermal equalization box in a case where the thermal equalization box accommodating an object to be insulated and the ice pack are integrated according to an embodiment of the present invention.

A container 1 has a cylindrical outer shape, and includes therein an accommodating portion having the same cylindrical shape. The ice pack 8 is accommodated in an ice pack accommodating case 8a. The ice pack accommodating case 8a is integrated with an thermal equalization box 5f that has a holding part capable of accommodating a small container 5i that contains an object to be cold-insulated. The thermal equalization box 5f that has the holding part has an accommodating hole 5g that is a hole for accommodating the small container 5i. A surface of the accommodating hole 5g perpendicular to an insertion direction has the same shape as a surface of the small container 5i perpendicular to the insertion direction so that the small container 5i can be inserted. It is desired that the small container 5i has a lid for reducing inflow and outflow of air.

The bottom wall 2 includes a protrusion 2c. After the small container 5i is inserted into the accommodating hole 5g, the protrusion 2c can be inserted into the accommodating hole 5g. A surface of the protrusion 2c perpendicular to the insertion direction has the same shape as the surface of the accommodating hole 5g perpendicular to the insertion direction so that the protrusion 2c can be inserted into the accommodating hole 5g, and the protrusion 2c is fitted into the accommodating hole 5g. In this way, the ice pack accommodating case 8a and the thermal equalization box 5f that has the holding part can be fixed to the container 1, and can be prevented from rotating therein.

In addition, as illustrated in Fig. 6B, the thermal equalization box 5f that has the holding part capable of accommodating the small container 5i may include a lid for reducing inflow and outflow of air. In this case, the thermal equalization box 5f that has the holding part capable of accommodating the small container 5i may include a rotation stopper 5h at its end. The rotation stopper 5h is not limited to a particular material, but, for example, may be made of a resin foam. Similarly, the protrusion 2c may also be made of a resin foam. The protrusion 2c and the rotation stopper 5h are not limited to a particular shape as long as the rotation in the container 1 can be prevented.

With the container 1 configured as illustrated in Figs. 6A and 6B, even in a case where the container 1 is used in a laid-down state, by fixing a vertical direction (a gravity direction) of the container 1 during transportation, it is possible to fix a direction of gravity with respect to the object to be cold-insulated.

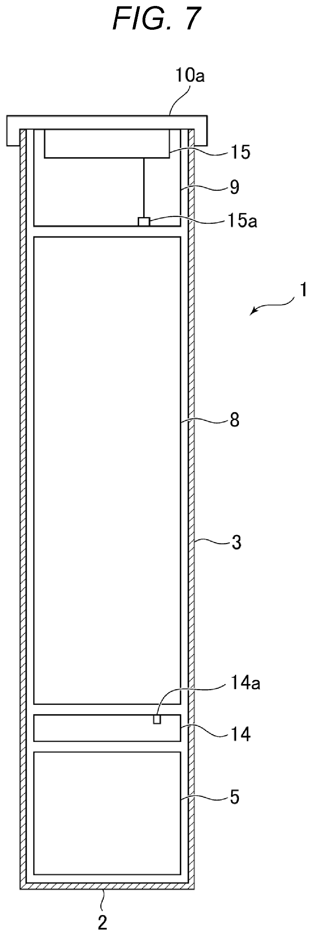

Next, a case where the container 1 includes a sensor, a display apparatus, a heat generator, and the like will be described. Fig. 7 is a cross-sectional view of a container as viewed from a side surface according to an embodiment of the present invention. A container 1 has a cylindrical outer shape, and includes therein an accommodating portion having the same cylindrical shape. In addition, the cross-sectional view is a cross-sectional view taken along a plane perpendicular to a circle that is a bottom surface of a cylinder constituting the outer shape of the container 1 and passing through the center of the circle.

The container 1 is not limited to a particular shape, but, for example, preferably has a cylindrical or quadrilateral-prismatic shape. A bottom wall 2 of the container 1 may have a planar or curved surface shape. The bottom wall 2 in a case where the bottom wall 2 has a planar shape is not limited to a particular shape, but, for example, preferably has a circular, rectangular, or square shape.

A side wall 3 of the container 1 is configured to extend from the bottom wall 2 toward an opening 4. In a case where the bottom wall 2 has a planar shape, the side wall 3 is preferably configured to extend in a perpendicular direction from the bottom wall 2. In a case where the bottom wall 2 has a circular shape, the side wall 3 has a curved surface shape. An object to be insulated 5, an ice pack 8, or a heat insulating material 9 can be accommodated in the container 1 from the opening 4.

An accommodating portion 6 of the container 1 for accommodating the object to be insulated 5 is not limited to a particular shape, but preferably has a shape corresponding to the shape of the container 1. That is, in a case where the container 1 has a cylindrical shape, the accommodating portion 6 also preferably has a cylindrical shape, and in a case where the container 1 has a quadrilateral-prismatic shape, the accommodating portion 6 also preferably has a quadrilateral-prismatic shape.

The ratio of a length L from the bottom wall 2 to the opening 4 formed by the side wall 3 to the square root of an area S of the opening 4 ((length from bottom wall to opening (mm))/(square root of area of opening (mm)), that is, L/√S) is preferably 1 or more, preferably 2.5 or more, and preferably 3.75 or more.

The ratio of the length L from the bottom wall 2 to the opening 4 formed by the side wall 3 to the square root of the area S of the opening 4 ((length from bottom wall to opening (mm))/(square root of area of opening (mm)), that is, L/√S) can be 50 or less, 40 or less, and 30 or less.

The bottom wall 2 and the side wall 3 have a heat insulating property. As a method for providing the heat insulating property to the bottom wall 2 and/or the side wall 3, a known method can be used, and examples thereof include, but are not particularly limited to, a method in which a vacuum space 7 is included in the bottom wall 2 and/or the side wall 3, and a method in which a material having a high heat insulating property is used for the bottom wall 2 and/or the side wall 3.

The accommodating portion formed by the bottom wall 2 and the side wall 3 is formed perpendicular to the bottom wall 2 so as to extend linearly from the bottom wall 2 to an opening end 4a.

In the container 1, it is preferable to accommodate the object to be insulated 5 in the vicinity of the bottom wall 2. It is preferable that the ice pack 8 is accommodated closer to the opening 4 than the object to be insulated 5. In a case where the bottom wall 2 and the side wall 3 have a heat insulating function by including the vacuum space 7 or the like, heat is transferred from the opening 4 of the container 1 to the bottom wall 2. Therefore, by providing the ice pack 8 closer to the opening 4 than the object to be insulated 5, the heat retention effect on the object to be insulated 5 is improved.

It is preferable that the heat insulating material 9 is accommodated closer to the opening 4 than the ice pack 8. The heat insulating material 9 is accommodated in the vicinity of the opening 4 as compared with the object to be insulated 5 and the ice pack 8. Since heat is transferred from the opening 4 of the container 1 to the bottom wall 2, heat transfer to the ice pack 8 can be reduced by accommodating the heat insulating material 9 in the vicinity of the opening 4, and the heat retention effect on the object to be insulated 5 is improved.

The ice pack 8 is not particularly limited, but a known ice pack can be used. As the ice pack 8, for example, dry ice or ice (ice cubes) can be used. As the ice pack 8, an ice pack accommodated in a hard case or an ice pack accommodated in a soft bag can also be used.

The container 1 can be covered with a lid 10a at the opening 4. The lid 10a has a circular bottom surface and has a cylindrical recess. The container 1 can be covered by fitting an upper portion of the container 1 on the opening 4 side into the recess of the lid 10a.

The container 1 includes a control apparatus 14. The control apparatus 14 may be installed at any position. The control apparatus 14 may be installed on the bottom wall side or on the opening 4 side with respect to the object to be insulated 5. In addition, the control apparatus 14 may or may not be in direct contact with the object to be insulated 5. Furthermore, the control apparatus 14 may be integrated with the object to be insulated 5. It is preferable that the object to be insulated 5 is thermally bonded to the ice pack 8 as much as possible. In a case where the ice pack 8, the control apparatus 14, and the object to be insulated 5 are arranged in this order, the control apparatus 14 is preferably integrated with the object to be insulated 5.

The control apparatus 14 includes a sensor capable of measuring environmental information of the object to be insulated 5 or the vicinity of the object to be insulated 5, or a parameter capable of identifying the environmental information. The environmental information is not particularly limited as long as it is a concept representing physical data or chemical data of the object to be insulated 5 or the vicinity of the object to be insulated 5. Examples of the environmental information can include temperature and humidity.

The sensor may be able to measure the temperature or the humidity itself, or may measure a parameter capable of identifying the environmental information such as the temperature or the humidity. For example, in a case where the sensor uses a resistor whose resistance value changes according to a change in temperature, the sensor can identify the temperature on the basis of the measured resistance value (corresponding to the parameter) by measuring the resistance value of the resistor.

The sensor can periodically measure the environmental information of the object to be insulated 5 or the vicinity of the object to be insulated 5 or the parameter capable of identifying the environmental information every predetermined period. For example, the sensor may measure the environmental information or the like every second or every minute. The predetermined period can be appropriately set.

The parameter measured by the sensor may be converted into the environmental information by a control part (such as a microcomputer) provided in the control apparatus 14 or a control part communicably connected to the control apparatus 14. For example, the sensor measures the resistance value of the resistor, and the control part identifies the temperature on the basis of the measured resistance value.

In addition, the environmental information or the parameter measured by the sensor, or the environmental information identified from the measured parameter is transmitted to a receiving part 15a connected to a display apparatus 15 by a transmitting part 14a provided in the control apparatus 14 or a transmitting part communicably connected to the control apparatus 14. The environmental information or the parameter measured by the sensor, or the environmental information identified from the measured parameter is transmitted to the receiving part 15a. Radio waves transmitted from the transmitting part may be transmitted to the receiving part 15a through a gap formed between the side wall 3 and the ice pack 8, or may be transmitted to the receiving part 15a through the ice pack 8 and/or the heat insulating material 9. A communication method in this case is not particularly limited, but, for example, communication by radio waves or infrared communication can be utilized. In a case where infrared communication is used, the transmitting part 14a is an infrared LED, and the receiving part 15a is a light receiving part.

The parameter or the environmental information (for example, temperature) received by the receiving part 15a is displayed on a display screen of the display apparatus 15 provided on the lid 10a of the container 1. The display apparatus 15 may be installed at any position, but can be provided on a side surface of the outer wall of the container 1 or an upper surface of the lid 10a (outer surface of the lid 10) that covers the opening 4 of the container 1. In a case where the receiving part 15a receives the parameter, a computing part of the display apparatus 15 may identify the environmental information on the basis of the received parameter and cause the display screen to display the identified environmental information.

The container 1 may include a storage part (for example, a memory of a microcomputer). The storage part may be provided in the control apparatus 14 or the display apparatus 15, or may be provided in any part of the container 1 other than these parts. The storage part may store the received parameter or environmental information in association with a date or time. Here, the date or time can be, for example, a date or time when the sensor measures the environmental information or the parameter, or a date or time when the storage part stores the environmental information or the parameter. In this way, a temporal change in the environmental information or the parameter can be stored as a record.

The container 1 may include a heat generator accommodated in the vicinity of the object to be insulated 5. The heat generator may be provided on the opening 4 side or on the bottom wall 2 side with respect to the object to be insulated 5. The heat generator and the sensor are provided in the control apparatus 14, for example. The control apparatus 14 can control initiation of heat generation, termination of the heat generation, and/or intensity of the heat generation by the heat generator according to the temperature measured by the sensor or the parameter measured by the sensor (according to the temperature identified from the parameter). At this time, the temperature of the object to be insulated 5 or the vicinity of the object to be insulated 5, or the parameter capable of identifying the temperature can be controlled so as to fall within a predetermined range. In this way, for example, when the ice pack frozen in a freezer is accommodated in the container 1 without adjusting its initial temperature or when the container 1 is temporarily exposed to a low temperature environment by being transported in a cold district, it is possible to prevent the temperature of the object to be insulated 5 from becoming lower than the predetermined range.

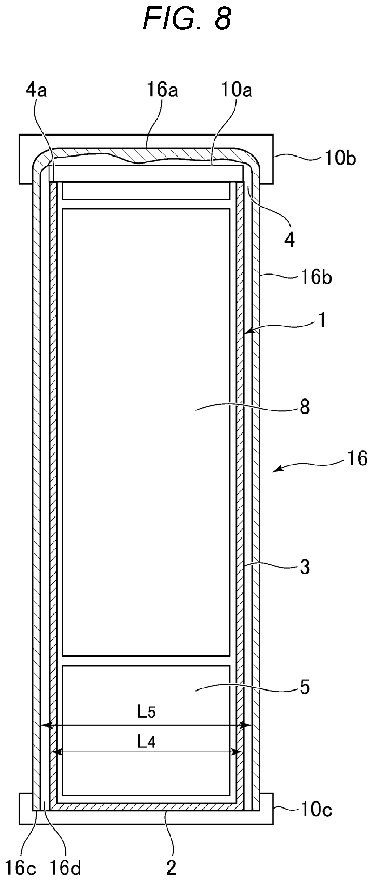

Next, a case where the container 1 is further accommodated in an outer container will be described. Fig. 8 is a cross-sectional view of a container as viewed from a side surface according to an embodiment of the present invention. The container 1 has a cylindrical outer shape, and includes therein an accommodating portion having the same cylindrical shape. In addition, the cross-sectional view is a cross-sectional view taken along a plane perpendicular to a circle that is a bottom surface of a cylinder constituting the outer shape of the container 1 and passing through the center of the circle.

The container 1 is not limited to a particular shape, but, for example, preferably has a cylindrical or quadrilateral-prismatic shape. A bottom wall 2 of the container 1 may have a planar or curved surface shape. The bottom wall 2 in a case where the bottom wall 2 has a planar shape is not limited to a particular shape, but, for example, preferably has a circular, rectangular, or square shape.

A side wall 3 of the container 1 is configured to extend from the bottom wall 2 toward an opening 4. In a case where the bottom wall 2 has a planar shape, the side wall 3 is preferably configured to extend in a perpendicular direction from the bottom wall 2. In a case where the bottom wall 2 has a circular shape, the side wall 3 has a curved surface shape. An object to be insulated 5, an ice pack 8, or a heat insulating material 9 can be accommodated in the container 1 from the opening 4.

An accommodating portion 6 of the container 1 for accommodating the object to be insulated 5 is not limited to a particular shape, but preferably has a shape corresponding to the shape of the container 1. That is, in a case where the container 1 has a cylindrical shape, the accommodating portion 6 also preferably has a cylindrical shape, and in a case where the container 1 has a quadrilateral-prismatic shape, the accommodating portion 6 also preferably has a quadrilateral-prismatic shape.

The ratio of a length L from the bottom wall 2 to the opening 4 formed by the side wall 3 to the square root of an area S of the opening 4 ((length from bottom wall to opening (mm))/(square root of area of opening (mm)), that is, L/√S) is preferably 1 or more, preferably 2.5 or more, and preferably 3.75 or more.

The ratio of the length L from the bottom wall 2 to the opening 4 formed by the side wall 3 to the square root of the area S of the opening 4 ((length from bottom wall to opening (mm))/(square root of area of opening (mm)), that is, L/√S) can be 50 or less, 40 or less, and 30 or less.

The bottom wall 2 and the side wall 3 have a heat insulating property. As a method for providing the heat insulating property to the bottom wall 2 and/or the side wall 3, a known method can be used, and examples thereof include, but are not particularly limited to, a method in which a vacuum space 7 is included in the bottom wall 2 and/or the side wall 3, and a method in which a material having a high heat insulating property is used for the bottom wall 2 and/or the side wall 3.

The accommodating portion formed by the bottom wall 2 and the side wall 3 is formed perpendicular to the bottom wall 2 so as to extend linearly from the bottom wall 2 to an opening end 4a.

In the container 1, it is preferable to accommodate the object to be insulated 5 in the vicinity of the bottom wall 2. It is preferable that the ice pack 8 is accommodated closer to the opening 4 than the object to be insulated 5. In a case where the bottom wall 2 and the side wall 3 have a heat insulating function by including the vacuum space 7 or the like, heat is transferred from the opening 4 of the container 1 to the bottom wall 2. Therefore, by providing the ice pack 8 closer to the opening 4 than the object to be insulated 5, the heat retention effect on the object to be insulated 5 is improved.

The ice pack 8 is not particularly limited, but a known ice pack can be used. As the ice pack 8, for example, dry ice or ice (ice cubes) can be used. As the ice pack 8, an ice pack accommodated in a hard case or an ice pack accommodated in a soft bag can also be used.

An outer container 16 accommodates the container 1. An accommodating portion of the outer container 16 is formed perpendicular to a bottom wall 16a of the outer container 16 so as to extend linearly from the bottom wall 16a to an opening end 16c of the outer container 16. In a case where the outer shape of the container 1 is cylindrical, the accommodating portion of the outer container 16 also preferably has a cylindrical shape. At least a part or the whole of the container 1 is accommodated in the accommodating portion of the outer container 16 with no gap therebetween. A portion having a volume of 80% or more of the volume of the container 1 is accommodated in the accommodating portion of the outer container 16, and a remaining portion having a volume of less than 20% may protrude from the accommodating portion of the outer container 16.

A gap between the accommodating portion of the outer container 16 and the outer shape of the container 1 is preferably 3 mm or less. That is, a difference between a diameter L₄ (that is, an outer diameter of the container 1) of the bottom surface of the outer shape of the container 1 and a diameter L₅ (that is, an inner diameter of the accommodating portion of the outer container 16) of a bottom surface of the accommodating portion of the outer container 16 is preferably 6 mm or less.

As already mentioned above, the opening 4 of the container 1 is located opposite to the bottom wall 2 of the container 1 in a longitudinal direction of the container 1, while the bottom wall 16a of the outer container 16 is located opposite to the bottom wall 2 of the container 1 in the longitudinal direction. An opening 16d of the outer container 16 formed by a side wall 16b extending from the bottom wall 16a of the outer container 16 is located opposite to the opening 4 of the container 1 in the longitudinal direction of the container 1. By using the outer container 16, it is possible to further reduce intrusion of heat from the opening 4 of the container 1.

The bottom wall 16a and/or the side wall 16b of the outer container 16 preferably include(s) a vacuum space. Since the vacuum space is included in the bottom wall 16a and the side wall 16b of the outer container 16, the heat insulating material 9 in the vicinity of the lid becomes unnecessary, and the amount of ice packs 8 filled in the container 1 can be increased.

The opening 4 of the container 1 is covered with the lid 10a, and the opening 16d of the outer container 16 is covered with a lid 10c. By fitting a lower portion of the outer container 16 on the bottom wall 16a side into the cylindrical recess of the cushioning portion 10b, the cushioning portion can also be provided on the bottom wall 16a side of the outer container 16. A material having elasticity (for example, rubber) can be used for the lids 10a and 10c and the cushioning portion 10b.

According to the present invention, a container includes: a bottom wall; and a side wall, wherein the bottom wall and the side wall have a heat insulating property, a ratio of a length from the bottom wall to an opening formed by the side wall to a square root of an area of the opening ((length from bottom wall to opening (mm))/(square root of area of opening (mm))) is 3.75 or more, and an accommodating portion formed by the bottom wall and the side wall is formed perpendicular to the bottom wall so as to extend linearly from the bottom wall to an opening end, or the accommodating portion formed by the bottom wall and the side wall is formed so as not to cause a plane parallel to the opening of a space by the accommodating portion to narrow from a bottom surface to the opening end. This makes it possible to extend a period in which the object to be insulated can be kept at a desired temperature.

According to the present invention, a container is used that includes: an inner container; and an outer container configured to accommodate the inner container, wherein an opening of the inner container formed by a side wall of the inner container extending from a bottom wall of the inner container is located opposite to the bottom wall of the inner container in a longitudinal direction of the inner container, a bottom wall of the outer container is located opposite to the bottom wall of the inner container in the longitudinal direction of the inner container, and an opening of the outer container formed by a side wall of the outer container extending from the bottom wall of the outer container is located opposite to the opening of the inner container in the longitudinal direction of the inner container. This makes it possible to extend a period in which the object to be insulated can be kept at a desired temperature.

According to the present invention, a container is used that includes: a sensor configured to be able to measure environmental information of an object to be insulated or a vicinity of the object to be insulated, or a parameter capable of identifying the environmental information; and a receiving part configured to receive the environmental information measured by the sensor, the parameter measured by the sensor, or the environmental information identified from the parameter. This makes it possible to acquire the environmental information of the object to be insulated or the vicinity of the object to be insulated.

According to the present invention, a container is used that includes: a sensor configured to be able to measure a temperature of an object to be insulated or a vicinity of the object to be insulated, or a parameter capable of identifying the temperature; and a heat generator accommodated in the vicinity of the object to be insulated, in which initiation of heat generation, termination of the heat generation, and/or intensity of the heat generation by the heat generator is controllable according to the measured temperature or the temperature identified from the measured parameter. This makes it possible to prevent the temperature of the object to be insulated or the vicinity of the object to be insulated from becoming too low.

According to the present invention, in a container including a bottom wall and a side wall, the bottom wall and the side wall having a heat insulating property, an object to be insulated is accommodated in the vicinity of the bottom wall, and an ice pack is accommodated closer to an opening formed by the side wall than the object to be insulated. This makes it possible to obtain an excellent heat retention effect, and to extend a period in which the object to be insulated can be kept at a desired temperature.

According to the present invention, the object to be insulated fixed by being inserted into a hole provided in a metal block around which a heat insulating material is at least partially disposed is stored at a predetermined temperature, and the metal block and the object to be insulated stored at the predetermined temperature are accommodated in the container in the presence of the ice pack. This makes it possible to reduce a temperature change of the object to be insulated until the frozen object to be insulated is accommodated in the heat-insulatable container.

### Reference Signs List

- 1: Container
- 2: Bottom wall
2a Bottom inner wall
2b Bottom outer wall
2c Protrusion
- 3: Side wall
3a Side inner wall
3b Side outer wall
3c Plating layer
3d Plating layer
- 4: Opening
4a Opening end
- 5: Object to be insulated
5a Specimen container
5b Bio-pouch
5c Thermal equalization box
5d Specimen container holding member
5e Metal block
5f Thermal equalization box that has holding portion
5g Accommodating hole
5h Rotation stopper
5i Small container
- 6: Accommodating portion
- 7: Vacuum space
- 8: Ice pack
- 9: Heat insulating material
- 10a: Lid
- 10b: Cushioning portion
- 11: First region
- 12: Second region
- 13: Third region
- 14: Control apparatus
- 15: Display apparatus
- 16: Outer container
16a Bottom wall
16b Side wall
16c Opening
16d Opening end

## Claims

1. A container comprising: a bottom wall; and a side wall, wherein
the bottom wall and the side wall have a heat insulating property,
a ratio of a length from the bottom wall to an opening formed by the side wall to a square root of an area of the opening ((length from bottom wall to opening (mm))/(square root of area of opening (mm))) is 3.75 or more, and
an accommodating portion formed by the bottom wall and the side wall is formed perpendicular to the bottom wall so as to extend linearly from the bottom wall to an opening end, or
the accommodating portion formed by the bottom wall and the side wall is formed so as not to cause a plane parallel to the opening of a space by the accommodating portion to narrow from a bottom surface to the opening end.

2. The container according to claim 1, wherein the bottom wall and/or the side wall includes a vacuum space.

3. The container according to claim 2, wherein an inner wall forming the vacuum space has a thickness of 0.25 mm or less.

4. The container according to claim 2 or 3, wherein a surface of the inner wall and/or an outer wall forming the vacuum space is provided with a function of enhancing radiative insulation of the vacuum space.

5. The container according to any one of claims 1 to 4, wherein the opening has an area of 5,000 mm² or less.

6. The container according to any one of claims 1 to 5, wherein the length from the bottom wall to the opening is 150 mm or more.

7. The container according to any one of claims 1 to 6, wherein an object to be insulated is accommodated in the vicinity of the bottom wall, an ice pack is accommodated closer to the opening than the object to be insulated, and a heat insulating material is accommodated closer to the opening than the ice pack.

8. A container comprising: an inner container; and an outer container that accommodates the inner container, wherein
an opening of the inner container formed by a side wall of the inner container extending from a bottom wall of the inner container is located opposite to the bottom wall of the inner container in a longitudinal direction of the inner container,
a bottom wall of the outer container is located opposite to the bottom wall of the inner container in the longitudinal direction of the inner container, and
an opening of the outer container formed by a side wall of the outer container extending from the bottom wall of the outer container is located opposite to the opening of the inner container in the longitudinal direction of the inner container.

9. The container according to claim 8, wherein a ratio of a length from the bottom wall of the inner container to the opening of the inner container formed by the side wall of the inner container to a square root of an area of the opening of the inner container ((length from bottom wall of inner container to opening of inner container (mm))/(square root of area of opening of inner container (mm))) is 3.75 or more.

10. The container according to claim 8 or 9, wherein
the opening of the inner container is covered with a lid of the inner container, and
the opening of the outer container is covered with a lid of the outer container.

11. The container according to any one of claims 8 to 10, wherein
an outer shape of the inner container is formed perpendicular to the bottom wall of the inner container so as to extend linearly from the bottom wall of the inner container to an opening end of the inner container,
the inner container is accommodated in an accommodating portion of the outer container formed by the bottom wall of the outer container and the side wall of the outer container, and
the accommodating portion of the outer container is formed perpendicular to the bottom wall of the outer container so as to extend linearly from the bottom wall of the outer container to an opening end of the outer container.

12. The container according to any one of claims 8 to 11, wherein
at least a part of the inner container is accommodated in the accommodating portion of the outer container formed by the bottom wall and the side wall of the outer container, and
a gap between the accommodating portion of the outer container and the outer shape of the inner container is 3 mm or less.

13. A container comprising: a bottom wall; and a side wall, the container comprising:
an object to be insulated accommodated in the vicinity of the bottom wall;
an ice pack and/or a heat insulating material accommodated closer to an opening formed by the side wall than the object to be insulated;
a sensor that is able to measure environmental information of the object to be insulated or a vicinity of the object to be insulated, or a parameter capable of identifying the environmental information; and
a receiving part that receives the environmental information measured by the sensor, the parameter measured by the sensor, or the environmental information identified from the parameter.

14. The container according to claim 13, comprising
a display part that displays the received parameter or the received environmental information.

15. The container according to claim 13 or 14, comprising
a storage part that stores the received parameter or the received environmental information in association with time.

16. The container according to any one of claims 13 to 15, wherein the parameter measured by the sensor, the environmental information identified from the parameter, or the environmental information measured by the sensor is transmittable to the receiving part via communication.

17. The container according to any one of claims 13 to 16, wherein the environmental information is a temperature.

18. A container comprising: a bottom wall; and a side wall, the container comprising:
an object to be insulated accommodated in the vicinity of the bottom wall;
an ice pack and/or a heat insulating material accommodated closer to an opening formed by the side wall than the object to be insulated;
a sensor that is able to measure a temperature of the object to be insulated or a vicinity of the object to be insulated, or a parameter capable of identifying the temperature; and
a heat generator accommodated in the vicinity of the object to be insulated, wherein
initiation of heat generation and/or termination of the heat generation, or intensity of the heat generation by the heat generator is controllable according to the measured temperature or the temperature identified from the measured parameter.

19. The container according to claim 18, wherein the initiation of heat generation and/or the termination of the heat generation, or the intensity of the heat generation by the heat generator is controllable so as to cause the temperature of the object to be insulated or the vicinity of the object to be insulated to be within a predetermined range, or so as to cause the parameter capable of identifying the temperature to be within a predetermined range.

20. A method of insulating an object to be insulated by using a container including a bottom wall and a side wall, the bottom wall and the side wall having a heat insulating property, the method comprising:
accommodating the object to be insulated in the vicinity of the bottom wall; and accommodating an ice pack closer to an opening formed by the side wall than the object to be insulated for insulation.

21. The method according to claim 20, further comprising accommodating a heat insulating material closer to the opening than the ice pack.

22. The method according to claim 20 or 21, comprising
accommodating the object to be insulated in a predetermined first region, wherein
a length of the predetermined first region in a longitudinal direction from the bottom wall to the opening is 1/5 or less with respect to a length from the bottom wall to the opening.

23. The method according to any one of claims 20 to 22, comprising
accommodating the ice pack in a predetermined second region, wherein
a length of the predetermined second region in the longitudinal direction from the bottom wall to the opening is 1/2 or more with respect to the length from the bottom wall to the opening.

24. The method according to any one of claims 20 to 23, comprising accommodating the object to be insulated packaged with a metal having a thermal conductivity at 0°C of 100 W/mK or more.

25. The method according to any one of claims 20 to 24, wherein the ice pack contracts upon freezing, or has a volume expansion due to freezing that is less than 10%.

26. The method according to any one of claims 20 to 25, wherein a ratio of a length from the bottom wall to the opening formed by the side wall to a square root of an area of the opening ((length from bottom wall to opening (mm))/(square root of area of opening (mm))) is 3.75 or more.

27. The method according to claims 20 to 26, comprising
accommodating the container in an outer container so as to
locate the opening of the container formed by the side wall of the container extending from the bottom wall of the container, opposite to the bottom wall of the container in a longitudinal direction of the container,
locate a bottom wall of the outer container opposite to the bottom wall of the container in the longitudinal direction of the container, and
locate an opening of the outer container formed by a side wall of the outer container extending from the bottom wall of the outer container, opposite to the opening of the container in the longitudinal direction of the container.

28. The method according to any one of claims 20 to 27, comprising
accommodating the object to be insulated in a pouch container, accommodating the pouch container in an thermal equalization box, and accommodating the thermal equalization box in the container,
accommodating the object to be insulated in the thermal equalization box, accommodating the thermal equalization box in the pouch container, and accommodating the pouch container in the container,
accommodating the object to be insulated in the thermal equalization box, accommodating the thermal equalization box in the container, and accommodating the container in the pouch container, or
accommodating the object to be insulated in an air-tight thermal equalization box.

29. The method according to any one of claims 20 to 28, comprising
accommodating the object to be insulated or the thermal equalization box accommodating the object to be insulated, and the ice pack and/or the heat insulating material in a bag, and
accommodating the bag in the container.

30. The method according to any one of claims 20 to 29, comprising
integrating the thermal equalization box accommodating the object to be insulated and the ice pack, and
accommodating the integrated thermal equalization box and ice pack in the container.

31. The method according to any one of claims 20 to 27, comprising
storing, at a predetermined temperature, the object to be insulated fixed by being inserted into a hole provided in a metal block around which a heat insulating material is at least partially disposed, and
accommodating the metal block and the object to be insulated stored at the predetermined temperature in the container in the presence of the ice pack.

32. The method according to any one of claims 20 to 31, wherein
an accommodating portion formed by the bottom wall and the side wall is formed perpendicular to the bottom wall so as to extend linearly from the bottom wall to an opening end, or
the accommodating portion formed by the bottom wall and the side wall is formed so as not to cause a plane parallel to the opening of a space by the accommodating portion to narrow from a bottom surface to the opening end.
